# EUROPEAN PATENT APPLICATION

(11) **EP 1 122 893 A1**
(43) Date of publication of application: **08.08.2001**
(21) Application number: 99923857.9
(22) Date of filing: 31.05.1999
(51) Int. Cl.: H04B 7/005

(54) **TRANSMISSION APPARATUS AND METHOD OF SIGNAL-POINT GENERATION**

(30) Priority: 14.10.1998 JP 29170498
(71) Applicant: FUJITSU LIMITED, Kawasaki-shi, Kanagawa 211-8588 (JP)
(72) Inventor: KAKU, Takashi, Fujitsu Limited, Kawasaki-shi, Kanagawa 211-8588 (JP); OKITA, Ryoji, Fujitsu Limited, Kawasaki-shi, Kanagawa 211-8588 (JP); HIRAO, Kyoko, Fujitsu Limited, Kawasaki-shi, Kanagawa 211-8588 (JP); YAMAZAKI, Yuri, Fujitsu Limited, Kawasaki-shi, Kanagawa 211-8588 (JP)
(74) Representative: Hitching, Peter Matthew
(86) International application number: JP9902889
(87) International publication number: WO0022752

(57) **Abstract**

A modem connected to a radio which compensates for the characteristics of the radio side to make them suitable for data transmission without changing the characteristics of the radio and thereby increase the transmission speed. Therefore, a transmission side modem is provided with a deemphasis filter for compensating for the characteristics of a preemphasis filter of the radio transmitter, and a receiving side modem is provided with an emphasis filter for compensating for the characteristics of the deemphasis filter of the radio receiver so as to compensate for the characteristics of the radio. Further, in the signal constellation when selecting a signal point of input data, redundant signal points are added to the outside of the constellation to enable emphasis of the in-phase components of the preceding and succeeding signal points.

## Description

### TECHNICAL FIELD

The present invention relates to a transmission apparatus and a method of signal-point generation suitable for use in such a transmission apparatus, more particularly relates to a transmission apparatus and a method of signal-point generation suitable for high speed transmission of data through a narrow band radio transmission path.

### BACKGROUND ART

In for example today's waterworks, electric power business, and public utilities, monitoring of the level of rivers or the intakes of dams is essential. For this monitoring, usually remote monitoring employing an optical fiber as a transmission line is used. If an optical fiber is used as transmission line, however, there is a possibility of disconnection of the transmission line due to some reason or another. If this happens, remote monitoring becomes disabled and there can be remarkable harm to the public.

Therefore, as a backup for when a transmission line is disconnected in the above way, the practice has been to switch to emergency use radio transmission to continue with the remote monitoring. In transmission of data by such emergency use radio transmission, however, the speed of data transmission is currently mainly 1200 bps. Only recently has data transmission of 4800 bps become possible.

In view of this situation, it is extremely difficult to use radio transmission to back up video data or audio data currently transmitted over an optical fiber. For sufficient backup, it is necessary to realize a radio transmission apparatus able to secure a speed of data transmission of over 4800 bps, that is, of at least 9600 bps.

When trying to realize such a radio transmission apparatus, there is another difficult problem however. Normally, such a radio transmission apparatus is comprised of a pair of a radio transmitter and a modem transmitter at the transmitting side and a pair of a radio receiver and modem receiver at the receiving side. There are restrictions on radio device parts due to various regulations, however, so those parts cannot be freely reconfigured. This is the above other difficult problem. Therefore, whether an over 9600 bps radio transmission apparatus can be realized or not depends on the performance of the modem parts.

If trying to realize a radio transmission system having a desired data transmission speed of over 9600 bps using a general V.29 modem, as explained in detail later, a sufficient operating margin as required by regulations cannot be secured. Considering the reduction in the operating margin due to fading etc., there is the problem that a practical radio transmission apparatus cannot be realized.

### DISCLOSURE OF THE INVENTION

The present invention has as its object, in view of the above problems, the provision of a transmission apparatus (mainly modem) able to secure a sufficient operating margin and a method of signal-point generation using this transmission apparatus to increase the operating margin.

To achieve this object, the present invention
(i) matches the center frequency of the carrier of the modem with the center frequency of the carrier of the radio to optimize the carrier frequency,
(ii) mounting in the modem transmitter and receiver a deemphasis filter and emphasis filter giving inverse characteristics to the characteristics of a preemphasis filter and deemphasis filter provided in the radio transmitter and receiver to suppress nonlinear distortion, and
(iii) employing a signal constellation of a total of 24 values different from the V.29 signal constellation and generating signal points so as to give redundancy to the signal points disposed at the outside and so as not to give redundancy to the signal points disposed at the inside and thereby reduce the peak factor and improve the S/N error rate.
   The transmission apparatus of the present invention need only satisfy just one of the above (i), (ii), and (iii), but it is most preferable that all of these three items be satisfied.
(iv) Further, it is preferable that vector multiplication be applied to a transmitting baseband signal to concentrate the transmission energy in a lower band and that vector multiplication be applied to a received baseband signal to return the energy shifted to the lower band at the transmitting side to the original spectrum.

### BRIEF DESCRIPTION OF THE DRAWINGS

Figure 1 is a view of the basic configuration of a transmission system according to the present invention,
Fig. 2 is a view of the specific configuration of a modem transmitter shown in Fig. 1,
Fig. 3 is a view of the specific configuration of a modem receiver shown in Fig. 1,
Fig. 4 is a view of the specific configuration of a conventional modem transmitter,
Fig. 5 is a view of the specific configuration of a conventional modem receiver,
Figs. 6a and 6b are waveform diagrams for explaining the improvement of a peak factor,
Fig. 7 is a view of the specific configuration of a signal point generating circuit in Fig. 2,
Fig. 8 is a view of an eye pattern of a signal constellation employed in the present invention,
Fig. 9 is a view of a conventional signal constellation,
Fig. 10 is a view of examples of numerical values for explaining the method of selection of a signal point according to the present invention,
Fig. 11 is a view of the spectrum in the state of increase of the energy near the carrier frequency,
Fig. 12 is a view of the spectrum after the spectrum of Fig. 11 passes through a filter (DE) 29,
Fig. 13 is a view of an example of a frequency shifter,
Fig. 14 is a view of the spectrum in the case of a frequency shift performed on the spectrum of Fig. 11,
Fig. 15 is a view of the spectrum when the frequency shifted signal passes through the filter 29,
Fig. 16 is a view of the characteristics of a deemphasis filter and an emphasis filter in the modem of the present invention,
Fig. 17 is a view for explaining the optimization of a carrier frequency according to the present invention,
Fig. 18 is a view of the degree of improvement due to the present invention,
Fig. 19 is a view of a general remote monitoring system as an example to which the present invention may be applied,
Fig. 20 is a view of a general radio transmission system,
Fig. 21 is a view of the filter characteristics of a preemphasis filter and deemphasis filter, and
Fig. 22 is a view for explaining the performance sought in a conventional radio transmission system.

### BEST MODE FOR WORKING THE INVENTION

To clarify the effects rendered by the present invention, first a general transmission apparatus to which the present invention is not applied will be explained.

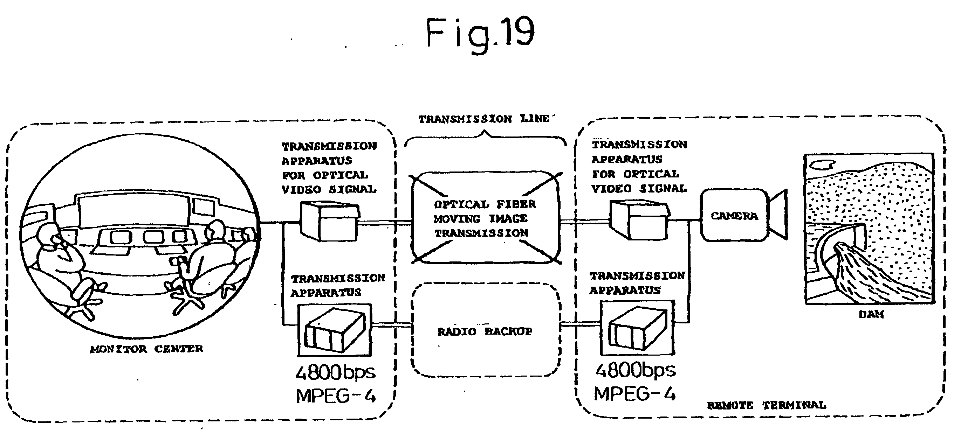

Figure 19 is a view of a general remote monitoring system of an example to which the present invention can be applied. In particular, it shows a dam monitoring system.

This dam monitoring system is comprised of a remote terminal having a camera for monitoring a remote dam, a monitoring center for receiving the video data or audio data obtained by the remote terminal, and a transmission path connecting the remote terminal and the monitoring center.

The transmission path sends a moving image or other monitoring information from the remote terminal to the monitoring center, but normally an optical fiber is used as the transmission path. Transmission apparatuses are provided at the two ends of the optical fiber for transmission of the monitoring information.

If an optical fiber is used, a large amount of data can be easily transmitted, but there is a shortcoming of an ease of disconnection due to some reason or another (shown by x mark in the figure). Therefore, when such a disconnection occurs, the system is switched to a radio transmission path for continuation of the transmission of data. Therefore, radio transmission apparatuses are provided at the two ends of the radio transmission path. The present invention relates to a modem comprising part of such a radio transmission apparatus. The following explanation will be given taking as an example a modem comprising part of such a radio transmission apparatus. The idea of the present invention, however, can be applied to other transmission apparatuses as well, for example, transmission apparatuses provided with CATV modems or can be applied to various modems such as modems built into DVD apparatuses.

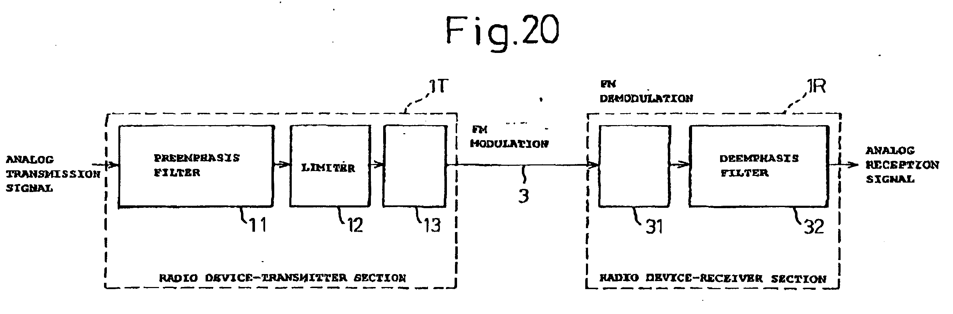

Figure 20 is a view of a general radio transmission system.

rn the figure, 1T indicates a radio transmitter ("T" indicates a transmitter), 1R a radio receiver, and 3 a transmission path (radio) connecting the two.

The radio transmitter 1T comprises a preemphasis filter 11 for reducing the noise in the higher band of the input analog transmission signal (modem signal), a limiter 12 for limiting the radio power in the air to within regulations, and an FM demodulator 13 for transmitting the input analog signal to the transmission path 3 by radio.

On the other hand, the radio receiver 1R comprises an FM demodulator 31 for demodulating an FM modulated and transmitted signal and a deemphasis filter 32 applying inverse filter characteristics to an analog signal preemphasized at the transmitting side to restore the original analog received signal (modem signal).

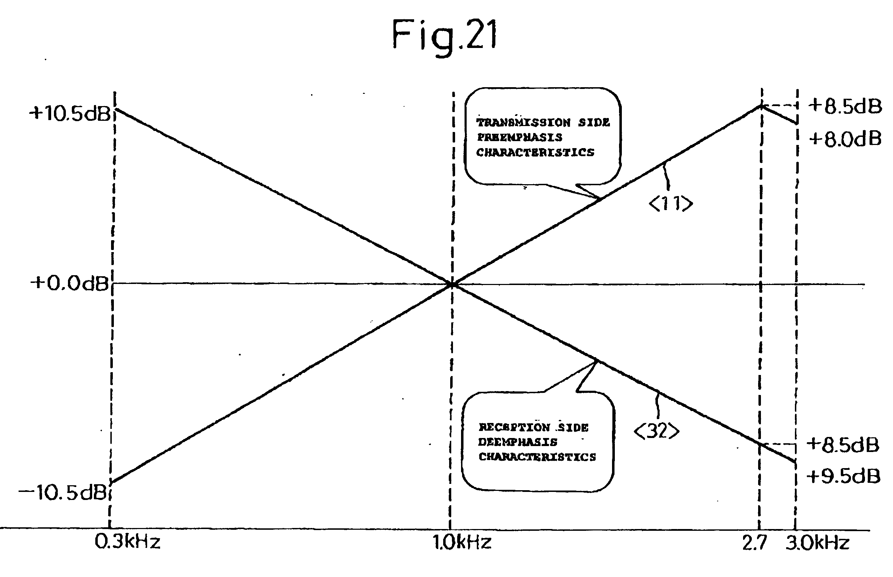

Figure 21 is a view of the filter characteristics of the preemphasis filter and deemphasis filter.

As shown in the figure, the preemphasis filter 11 of the transmitting side acts to pull up the higher band side of the analog signal to be sent (curve <11> in the figure). On the other hand, the deemphasis filter 32 on receiving side acts to apply characteristics inverse to the characteristics shown by the above curve <11> to the received analog signal (curve <32> in the figure). The preemphasis is given in advance at the transmitting side because general radios are designed to particularly match with voice analog signals. That is, they are configured to compensate for characteristics distinctive to the voice band, that is, the peaking at about 1 kHz and the rapid drop in the level the further higher the band.

When such a conventional radio (IT, 1R) is built into a transmission apparatus at the radio side shown in Fig. 19, a modem transmitter is connected to the input side of the radio transmitter 1T and a modem receiver is connected to the output side of the radio receiver 1R to enable the transmission of data between the monitoring center and a remote terminal.

The characteristics of such a conventional transmission apparatus will be considered in detail below.

Considering the features of the radios (1T, 1R),
first, since use is made of the 2700 Hz band of 0.3 to 3.0 kHz as the transmission band, use is made of a band narrower than the voice band of 0.3 to 3.4 kHz in telephone lines and the like (see Fig. 21).

Second, as shown in Fig. 20, the preemphasis filter 11 and the deemphasis filter 32 are built in. Therefore, the frequency characteristics of the analog signals in the radios (1T, 1R) are not flat as will be clear from Fig. 21. Such not flat frequency characteristics are optimal for transmitting an analog signal of voice etc. by a high quality. They are not suitable however for transmission of video data, audio data, or other data through a modem. The reason is that high quality data transmission requires flat frequency characteristics. In the end, the above-mentioned preemphasis filter characteristics distinctive to the radio transmitter 1T become an obstacle to the desired data transmission.

Third, a look at the limiter 12 on the transmission side shown in Fig. 20, the limiter 12, as explained above, is a component for limiting the radio power in the air to within regulations. Due to the limiting action of the limiter 12, however, faithful transmission of the waveform ends up being inhibited.

Further, considering the above first feature, the transmission band of the radios (1T, 1R) is 2700 Hz. With the current V.29 modems, however, 2760 Hz is considered necessary as the transmission band (in the case of a roll-off rate of 15%, 2760 Hz (= 2400 × 1.15)). Therefore, the required transmission band of a modem (2760 Hz) ends up exceeding the transmission band distinctive to radios (2700 Hz).

Further considering the above second feature, as explained above, there is poor compatibility between modems where flat frequency characteristics are required and radios (1T, 1R) which inherently have emphasized not flat frequency characteristics.

Further considering the above third feature, due to the limiting action of the above limiter 12 and with the addition of the action of the above preemphasis, even if trying to make the level of transmission input from the modem transmitter to the radio (1T) higher, due to the limiting action and the preemphasis action, the transmission level from the radio transmitter 1T becomes saturated and distortion ends up occurring in the transmission output signal. As a result, data error easily occurs.

Note that the distortion of the above transmission output signal changes in degree depending on the frequency. Further, the distortion of the transmission output signal becomes larger the larger the peak factor of the transmission input signal from the modem transmitter.

On the other hand, looking at the case where the level of the transmission input from the modem transmitter to the radio (1T) falls, the S/N ratio of the transmission signal on the radio transmission path 3 deteriorates. Therefore, in this case as well, data error easily occurs.

In the end, to suppress the generation of such data error, it is requested that the above transmission input level be in a certain specific region.

Due to the above various factors, even if attempting to realize a radio transmission system having a data transmission speed of over the desired 9600 bps using a V.29 modem, it was judged that a sufficient operating margin could not be secured.

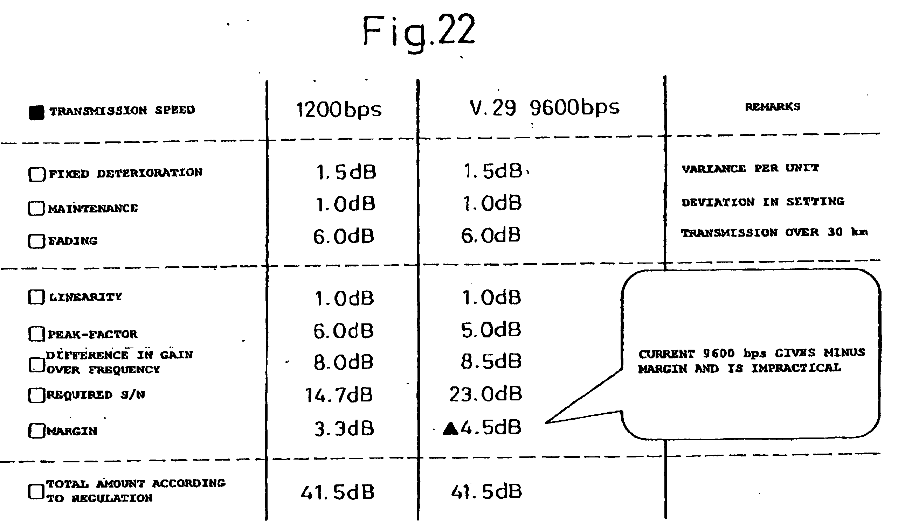

Figure 22 is a view for explaining the performance sought in a conventional radio transmission system.

In the figure, the top section shows the data transmission speed. "1200 bps" is the current maximum data transmission speed, while "V.29 9600 bps" is the data transmission speed to be realized using a V.29 modem. The leftmost column in the figure shows the parameters defined by government regulations (for example, the regulations set by the Ministry of Construction in Japan).
"Fixed deterioration" is the extent of deterioration for each transmission apparatus,
"Maintenance" is the degree of deviation from various settings established when installing a modem,
"Fading" is the degree of loss when fading occurs in a transmission path of 30 km length,
"Linearity" is the extent of linearity between the data input at the transmitting side and the data output at the receiving side,
"Peak factor" is the extent of the peak level with respect to the average level of the transmission signal,
"Difference in gain over frequency" is the difference in gain when reducing the level by an amount to avoid the output becoming saturated due to raising the high band by using the preemphasis filter.
"Required S/N" is the S/N ratio for preventing data error,
"Margin" is the above-mentioned operating margin. This is the value obtained by subtracting the total of the values (dB) imposed on the above parameters from the total value according to regulations (41.5 dB). Under the current 1200 bps, a 3.3 dB margin can be secured, but when using a V.29 9600 bps modem, the margin becomes -4.5 dB and a minus margin results. The technique of the present invention for converting this minus margin to a plus margin will be explained in detail below. The technique of the present invention in principle does not make any design changes on the radios (1T, 1R) themselves, but realizes the plus margin and enables high speed data transmission of over 9600 bps by improving the modem transmitter and the modem receiver only.

The above improvements are as follows:
(i) Optimization of the carrier frequency
(ii) Mounting of an emphasis filter and deemphasis filter
(iii) Improvement of the peak factor and improvement of the S/N error rate by employing a new method for signal-point generation in a modem
(iv) Applying vector multiplication to a transmitting baseband signal to concentrate the transmission energy to the lower band and applying vector multiplication to the received baseband signal to restore the energy shifted to the lower band at the transmitting side to the original spectrum.

Looking at the above (i), in the present invention, the carrier frequency of the modem is moved to match with the carrier frequency of the radio. Due to this, the transmission energy on the radio transmission line 3 is made to move to the center of the transmission band of the radio transmission line. As a specific example, while the carrier frequency (center frequency) of a general V.29 modem is set to 1700 Hz, this is changed to 1650 Hz in the modem of the present invention. 1650 Hz is the carrier frequency normally set for a radio.

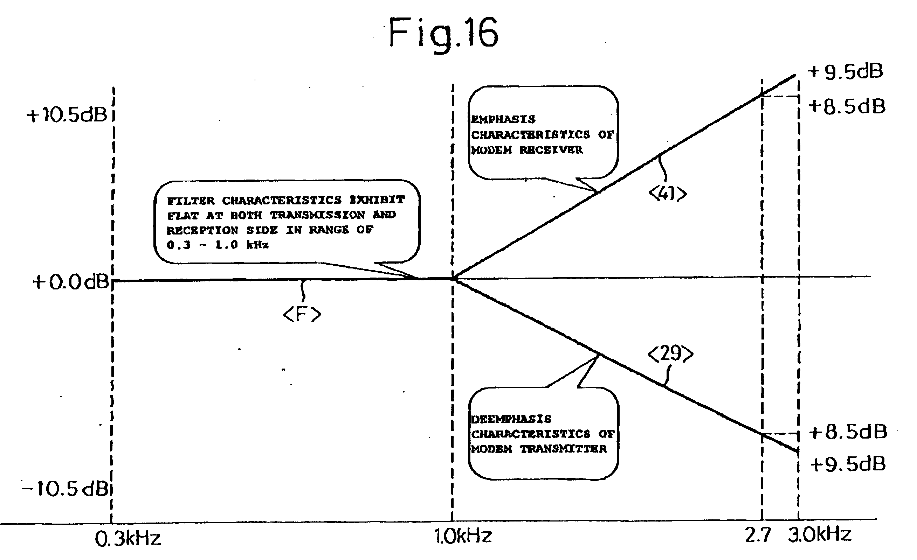

Looking at the above (ii), in the present invention, the modem transmitter is provided with a deemphasis filter having filter characteristics inverse with the preemphasis filter 11 distinctive to the radio transmitter. Further, the modem transmitter is provided with an emphasis filter having filter characteristics inverse to the deemphasis filter 32 distinctive to the radio receiver. In this case, it is preferable to have the inverse filter characteristics appear only for the high band of over a predetermined frequency and to give flat characteristics in the low band below that predetermined frequency (see later explained Fig. 16).

By this approach, the frequency characteristics of the transmission signal output from the radio (1T) become flat and the transmission input level can be maximized.

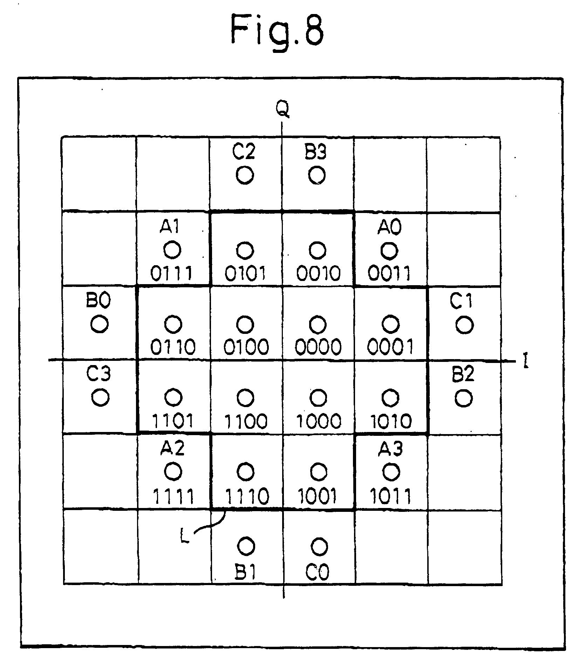

Looking at the above (iii), in the present invention, to reduce the already explained peak factor, first redundancy is given to the transmission signal points on the signal constellation coordinate system. when determining the signal point to be transmitted, the signal point giving the smallest amount of deviation with respect to the signal point sent immediately before is made the signal point to be transmitted from there (see Fig. 8).

Due to this, it is possible to prevent the amplitude of the transmission input signal from the modem to the radio (1T) from becoming saturated and as a result the upper limit of the level of the transmission input signal can be maximized.

Explaining this in further detail, the number of signal points is increased from the past on the signal constellation coordinate system and redundancy is given to the signal points.

In this case, the above redundancy is given to the plurality of signal points at coordinates away from the origin of the coordinate system, that is, at the outside, among a set of signal points in the signal constellation coordinate system. This is because the outside signal points have larger peak values and energy values and have large effects on the reduction of the peak factor. Due to this, the redundancy to be added is kept to a minimum and the peak factor can be minimized.

Further, in the above case, the average energy of the outside signal points falls, so the above-mentioned S/N error rate can also be improved.

Further, looking at the above (iv), in the present invention, in relation to the above (iii), the in-phase components are emphasized. By doing this, the energy near the carrier frequency ends up being increased. If a signal is passed through the deemphasis filter 29 with the energy increased as it is, part of the output signal from the filter 29 will be removed and the energy of the output signal will end up falling. Therefore, the signal is shifted to the lower band to prevent a reduction in this energy as much as possible.

Below, an explanation will be given of the specific configuration of the present invention.

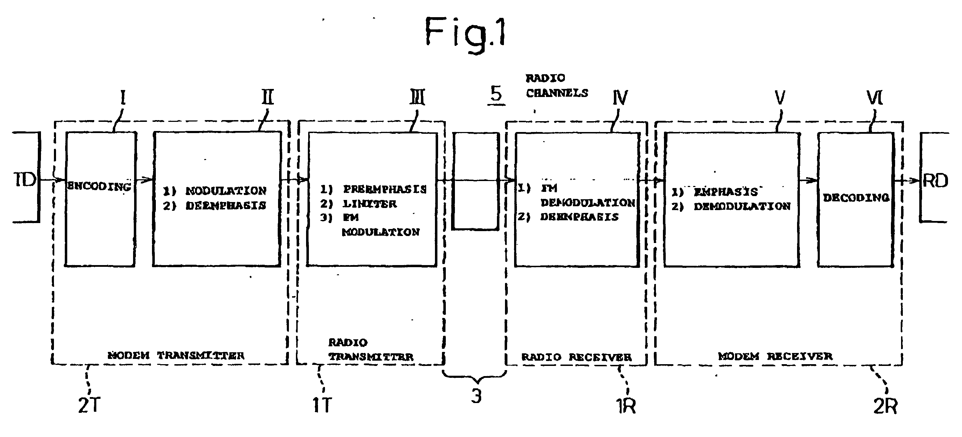

Figure 1 is a view of the basic configuration of a transmission system based on the present invention. Note that similar components are assigned the same reference numerals or symbols throughout the figures.

In the figure, 5 is a transmission system according to the present invention. Referring to Fig. 19, the transmission data TD from the remote terminal is given through the transmission system 5 as received data RD to the monitoring center.

The already explained modem transmitter and modem receiver are shown by reference numerals 2T and 2R in Fig. 1. These modem transmitter and receiver 2T and 2R and radio transmitter and receiver 1T and 1R are expressed by the six functional blocks I to VI. Among these, the functional block III forming the radio transmitter 1T of the transmitting side and the functional block IV forming the radio receiver 1R of the receiving side facing it through the transmission path 3 are completely the same as the configurations shown in Fig. 20. No changes are made in the present invention to the radios (1T, 1R).

The modem transmitter 2T according to the present invention is comprised of the functional blocks I and II. The functional block I is a coding unit and codes the input transmission data TD. The encoded data is input to the modulation/deemphasis processor shown as the functional block II where it is modulated and deemphasized and becomes the transmission input signal to the radio transmitter 1T. The functional block III forming the radio transmitter 1T preemphasizes (11) the transmission input signal, limits the signal level by the limiter (12), then performs FM modulation (13) and sends the result to the receiving side.

The functional block IV forming the radio receiver 1R of the receiving side demodules the received signal by FM demodulation (31), deemphasizes it (32), then inputs the result to the modem receiver 2R.

The functional block V forming the modem receiver 2R emphasizes the output signal from the radio receiver 1R, demodules it, then decodes it in the decoding unit forming the functional block VI and outputs the received data RD.

The radios (1T, 1R) shown in Fig. 1 are radios for transmitting and receiving a voice signal. Therefore, preemphasis and deemphasis are performed.

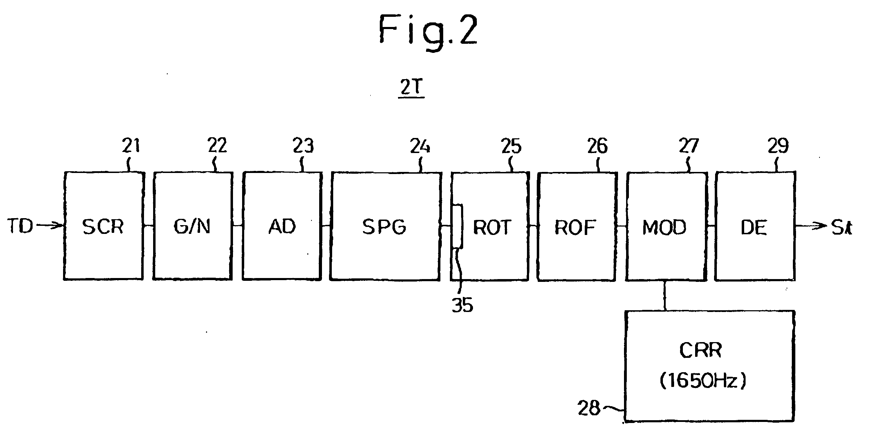

Figure 2 is a view of the specific configuration of the modem transmitter shown in Fig. 1.

In the figure, the modem transmitter 2T is comprised of a scrambler (SCR) 21 for randomizing (gray coding) the transmission data TD input from for example a remote terminal, a gray/natural converter (G/N) 22 for converting a gray code to a natural code, an adder circuit (AD) 23 for adding the phase of the signal (considering the fact that the absolute phase on the line is unstable and enabling reading of the signal by the relative phase at the receiving side), a signal-point generating circuit (SPG) 24 for selecting and outputting one signal point corresponding to a for example 4-bit output from the adder circuit 23 from the plurality of signal points, a frequency movement circuit (ROT) 25 for frequency rotation explained later, a roll-off filter (ROF) 26 for wave shaping the output signal from the frequency movement circuit 25, a modulator (MOD) 27 for modulating the carrier by the wave shaped output signal, a carrier generator (CRR) 28 for generating a carrier (1650 Hz) and applying it to the modulator 27, and a deemphasis filter (DE) 29 for deemphasizing the output signal from the modulator 27. The output of the filter 29 becomes the analog transmission input signal St to the radio transmitter 1T.

The frequency movement circuit 25 is provided for the following reasons. As explained above, by emphasizing the in-phase components, the energy near the carrier frequency ends up increasing, but if passing the signal through the deemphasis filter 29 with the energy increased as it is, part of the output signal from the filter 29 will end up being removed and the energy of the output signal will end up falling, so to prevent such a reduction in the energy as much as possible, it is preferable to shift the signal to the lower band. Therefore, the frequency movement circuit 25 is introduced.

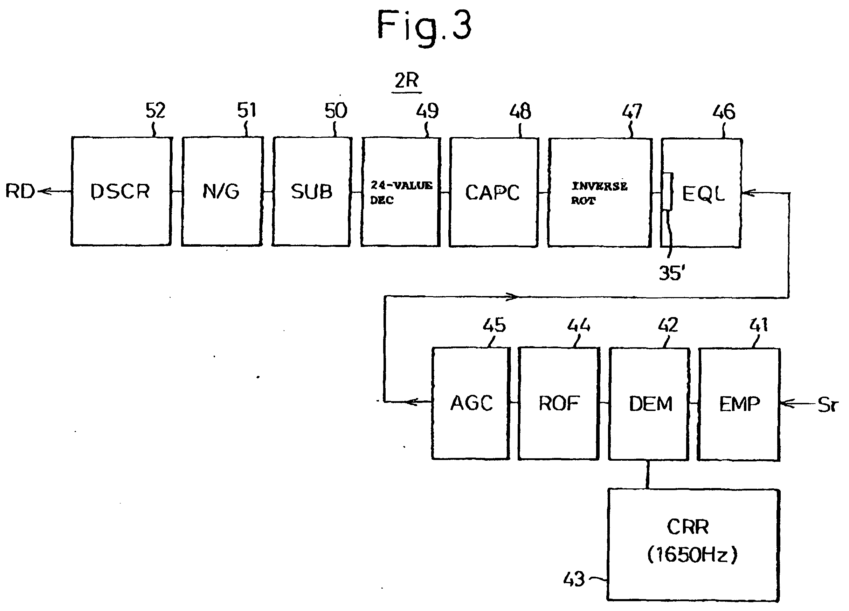

Figure 3 is a view of the specific configuration of the modem receiver shown in Fig. 1.

In the figure, the modem receiver 2R is comprised of an emphasis filter (EMP) 41 receiving the received input signal Sr input from the radio receiver 1R and applying filter characteristics inverse to the characteristics of the deemphasis filter 22 of the receiver 1R, a demodulator (DEM) 42 for demodulating the output signal from the filter 41 by a predetermined carrier, a carrier generator (CRR) 43 for generating a carrier (1650 Hz) and applying it to the demodulator 42, a roll-off filter (ROF) 44 for wave shaping the demodulated output signal, an automatic gain controller (AGC) 45 for holding the level of the output signal from the filter 44 constant, an automatic equalizer (EQL) 46 applying processing to the output signal from the AGC 45 to suppress inter-symbol interference, an inverse frequency movement circuit (inverse ROT) 47 for frequency movement inverse to the frequency movement at the ROT 25 of the transmitting side with respect to the output signal of the EQL 46, a carrier automatic phase control circuit (CAPC) 49 for controlling the carrier phase of a signal after adding the inverse frequency movement, a 24-value decision circuit (24-value DEC) 49 for receiving as input an output signal of the CAPC 49 and deciding which signal point to select as received data from among the 24 signal points (see Fig. 8), a subtractor circuit (SUB) 50 for performing an inverse operation to the adder circuit 23 of the transmitting side on the for example 4-bit output from the DEC 49, an N/G converter 51 for performing natural/gray conversion inverse to the G/N converter 22 of the transmitting side on the output signal of the SUB 50, and a descrambler (DSCR) 52 for applying the inverse operation to the scrambler 21 of the transmitting side on the output signal after N/G conversion. The output of the descrambler 52 becomes the received data RD to be received at for example the monitoring center.

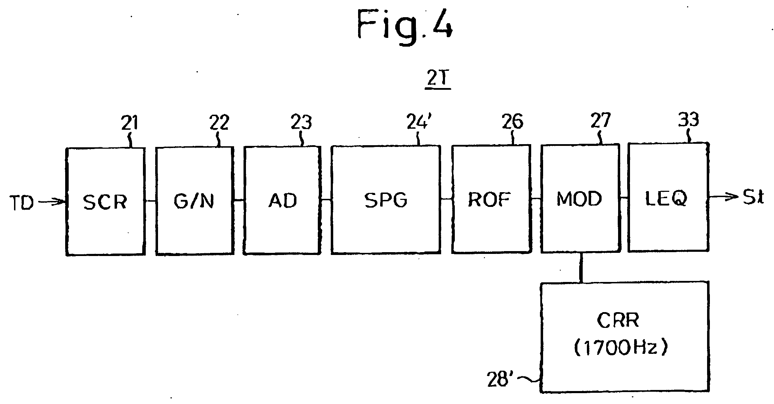

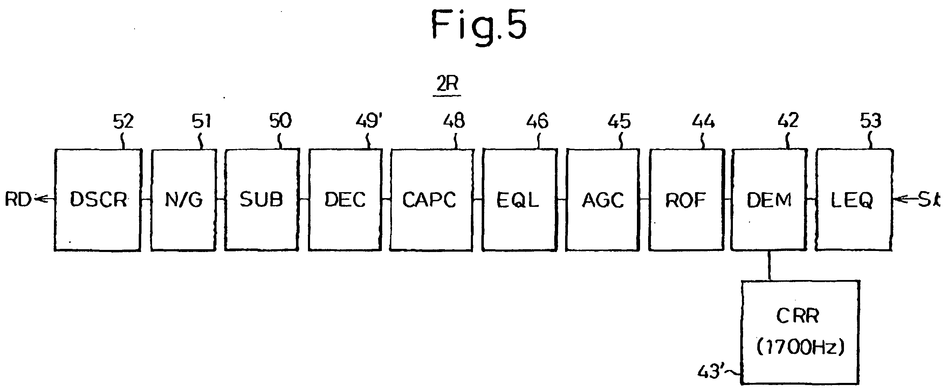

Figure 4 is a view of the specific configuration of a conventional modem transmitter,
while Fig. 5 is a view of the specific configuration of a conventional modem receiver.

By comparing Fig. 2 and Fig. 4, the features of the modem transmitter 2T according to the present invention become much clearer. Similarly, by comparing Fig. 3 and Fig. S, the features of the modem receiver 2R according to the present invention become much clearer.

Note that the final block (LEQ) 33 in Fig. 4 is a transmitting side line equalizer, while the first block (LEQ) 53 in Fig. 5 is a receiving side line equalizer.

Comparing the conventional modem transmitter 2T (Fig. 4) and the modem transmitter 2T of the present invention shown in Fig. 2, the model transmitter 2T according to the present invention is provided with the frequency movement circuit (ROT) 25, while the conventional modem transmitter 2T does not employ a configuration corresponding to the ROT 25. Further, the frequency of the carrier signal generated by the carrier generating circuit (CRR) differs between the transmitter according to the present invention (1650 Hz) and the transmitter of a V.29 modem (1700 Hz). Further, in the modem transmitter according to the present invention, the signal output side is provided with a deemphasis filter 29, while there is no filter corresponding to this at the conventional modem transmitter.

Further, comparing the conventional modem receiver 2R (Fig. 5) and the modem receiver 2R according to the present invention shown in Fig. 3, the modem receiver 2R according to the present invention differs from the conventional modem receiver 2R in that the input side of the analog signal is provided with an emphasis filter (EMP) 41, the frequency of the carrier signal generated by the carrier generating circuit (CRR) differs from that of the V.29 modem (1650 Hz/1700 Hz), and an inverse frequency movement circuit (inverse ROT) 47 is provided.

As explained previously, in the present invention, three improvements (i), (ii), and (iii) are aimed at. Among these, the explanation will first be given of the improvement (iii). The improvement (iii) is an improvement of the peak factor and an improvement of the S/N error rate.

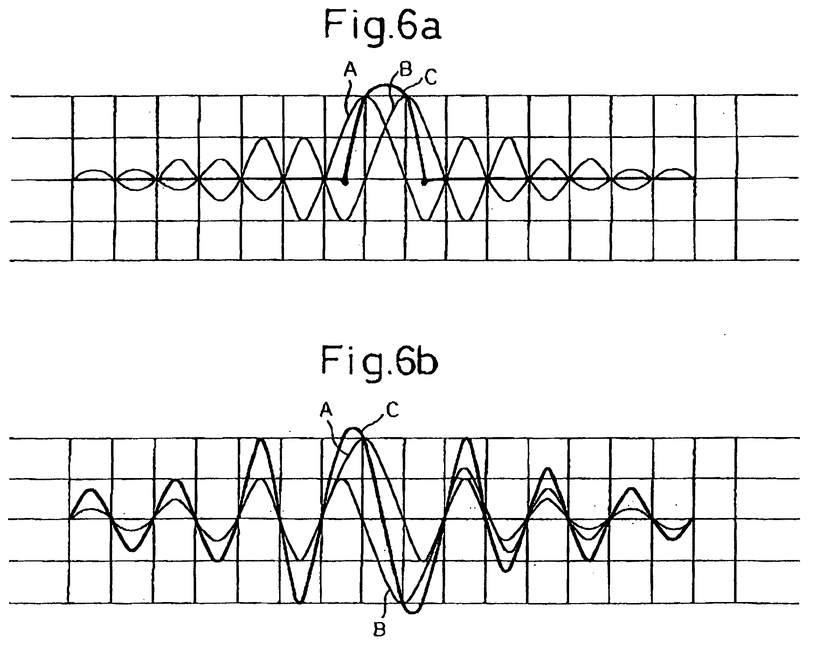

Figures 6a and 6b are waveform diagrams for explaining the improvement of the peak factor. Figure 6a is a waveform diagram of the improvement (iii) according to the present invention and shows the impulse responses of preceding and succeeding signals. on the other hand, Fig. 6b shows the impulse responses when the improvement (iii) is not sought. In both figures, the ordinate indicates the amplitude of the signals, while the abscissa indicates the time.

In Fig. 6a, A shows the waveform of the signal first output, while B shows the waveform of the signal output later after the signal A. Further, the combined waveform of the signals A and B is shown by C (same for Fig. 6b).

The preceding signal A and the succeeding signal B are separated by peak position by exactly one lattice shown in the figure, but are in phase. Therefore, the inter-symbol interference becomes small and a stable waveform is obtained. Further, the peak value of the signal tends to decline. That is, if the signal A and the signal B become in phase, the peak factor is improved.

As opposed to this, in the case of Fig. 6b, the peak positions of the signal A and the signal B are the same as in Fig. 6a, but the phases become opposite. In this case, the inter-symbol interference becomes large and further the combined waveform C oscillates as illustrated. Further, the peak value of the combined waveform C tends to increase.

Therefore, in the present invention, processing is performed at the signal point generating circuit 24 of Fig. 2 so that the signal points of the preceding and succeeding signals become in phase. Due to this, the inter-symbol interference is made smaller and the peak factor is reduced.

Therefore, in the signal point generating circuit 24, the number of signal points on the signal constellation coordinate system is increased from the 16 of the past to 24 so as to increase the in-phase components. That is, redundancy is given to the signal points of the transmission data TD.

However, the number of signal points increasing by giving redundancy in the above signal constellation coordinate system becomes extremely small. This is because if the number of signal points is simply increased, this would become a new factor generating error.

Therefore, redundancy is given only when the effect of the peak factor would become large. Redundancy is not given when the effect of the peak factor would be small.

Whatever the case, the peak factor is reduced by aligning the phases of the signal points. Along with this, the S/N error rate is also improved. This will be explained in more specifically below.

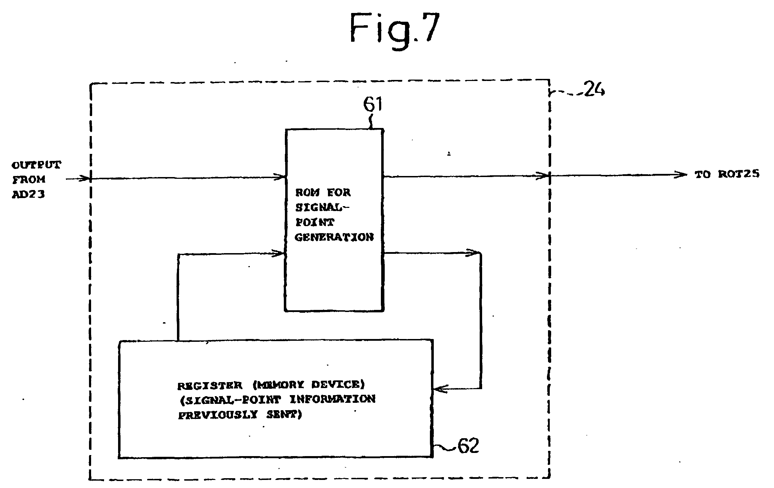

Figure 7 is a view of the specific configuration of the signal point generating circuit in Fig. 2.

The signal point generating circuit (SPG) 24 of Fig. 2 according to the present invention is one considerably different from the conventional signal point generating circuit (SPG) 24' shown in Fig. 4. This new signal point generating circuit 24 contributes to the above improvement (iii). The signal point generating circuit 24 is mainly comprised of the signal point generation ROM 61 and register 62.

The signal point generating circuit 24 of the transmission data TD, as shown in Fig. 7, stores the signal-point output information of the transmission data TD in the register 62 and feeds it back to the address input of the ROM 61. Inside the ROM 61, the signal point to be actually transmitted is selected from the currently input data and the information of the signal point of the data transmitted in the past (for example, immediately before) (held in the register 62) and output to the ROT 25.

Therefore, since the signal point is selected so that the preceding and succeeding data become as close in phase as possible, the phase alignment explained in Fig. 6a is achieved and the peak factor is reduced. Note that even if aligning the phases of the data compulsorily at the transmitting side, it is possible to easily reproduce the original data at the receiving side (explained later).

To enable phase alignment of the data, a signal constellation unique to the present invention is employed in the modem transmitter 2T according to the present invention, in particular, the above ROM 61.

Figure 8 is a view of the eye pattern of the signal constellation employed in the present invention.

In the figure, a total of 24 signal points (shown by small circles) are arranged on a complex plane coordinate system (I-Q).

The complex plane coordinate system (I-Q) is divided into a plurality of square lattices. The signal points are arranged at the centers of the lattices. In the figure, 12 signal points are arranged inside the frame enclosed by the bold lines L, while 12 signal points are arranged outside of the frame. Four bits of data 0000 to 1111 are allocated to the 12 signal points inside the frame and the four signal points A0, A1, A2, and A3 outside the frame, that is, the total 16 signal points. Further, outside the frame, in addition to A0 to A3, B0 to B3 and C0 to C3, or a total of eight signal points, are arranged.

The signal points are output from the signal point generating circuit 24 of the transmission data TD (Fig. 7). The signal point generating circuit 24, as explained in Fig. 7, is provided with the signal point generation ROM 61 and the register 62. The register 62 temporarily stores the information of the signal point output from the ROM 61 in the past (for example, immediately before). Further, the ROM 61 receives as input the output from the adder circuit 23 (Fig. 2) and the output from the register 62. One signal point is selected and output in accordance with the value (address) shown by these outputs. That is, the signal point output from the ROM 61 is determined in accordance with a signal point previously selected and output.

Since the signal points inside the frame have small energy, if a signal point inside the frame is selected, the signal point is output from the ROM 61 as it is and applied to the ROT 25 (Fig. 2). On the other hand, if a signal point outside the frame is selected, the signal point is selected and output as follows.

As one example, if assuming that the signal point corresponding to the transmission data TD to be transmitted is A0, in this case, the signal point giving the smallest square distance (amount of deviation) from the signal point output in the past (immediately before) from the signal points A0, B0, and C0 is selected and used as the signal point to be output in this case. Note that the signal points A0, B0, and C0 are arranged on a complex plane coordinate system at intervals of 120°, centered on the origin, relative to each other.

For example, if the signal point of the data TD transmitted in the past (here, immediately below) is (0110), in this case, the signal point giving the smallest square distance becomes B0, so B0 is selected and read from the ROM 61 as the signal point of the transmission data TD to be transmitted. On the other hand, at the receiving side, no matter which of A0, B0, and C0 is received, it is always decided that A0 is received. This computation is executed by a 24-value DEC 49 (Fig. 3).

Selecting the signal point to give the smallest square distance with the signal point selected and output immediately before in this way, as already explained, means aligning the phase of the preceding and succeeding signal points and reduces the peak factor. Here, the "square distance" means the sum of the squares of the distance x in the first direction (I) between preceding and succeeding signal points and the distance y in the second direction (Q) perpendicular to the same, that is, x²+y².

Further, the number of signal points is raised from the normal 16 to 24 so as to facilitate selection of the signal point giving the smallest square distance. That is, the signal points are given redundancy.

Since the signal points outside of the frame are increased, the transmission energy becomes larger. Therefore, the number of signal points to be increased should be kept as small as possible.

The above example was explained with reference to A0, B0, and C0, but when A1 is input, the signal point is selected from A1, B1, and C1 so as to give the smallest square distance with the signal point output immediately before. Similarly, when A2 is input, the signal point is selected from A2, B2, and C2 so as to give the minimum square distance with the signal point output immediately before, while when A3 is input, the signal point is selected from A3, B3, and C3 so as to give the minimum square distance with the signal point output immediately before.

At the receiving side, no matter which of (A1, B1, C1) is received, the received data is decided as A1. Similarly, no matter which of (A2, B2, C2) is received, the received data is decided as A2 and no matter which of (A3, B3, C3) is received, the received data is decided as A3.

In this case, the probability of a signal point inside the frame being selected becomes equivalent, but the probability of a signal point outside the frame being selected is reduced to one-third. Therefore, the average power energy is reduced, the peak factor is reduced, and the S/N error rate is improved.

The signal constellation of Fig. 8 is a constellation unique to the present invention giving a reduction of the peak factor and an improvement of the S/N error rate and differs tremendously from the conventional signal constellation.

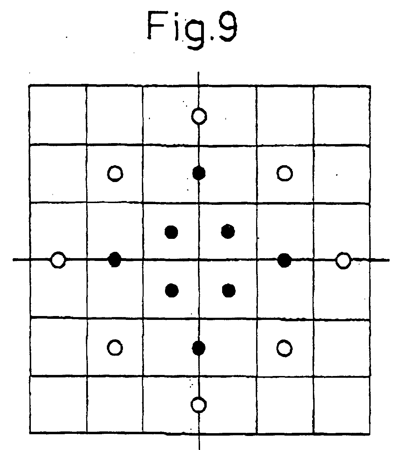

Figure 9 is a view of a conventional signal constellation and is a signal constellation based on the V.29 recommendation.

In the case of Fig. 9, the signal point is not necessarily positioned at a center point of a lattice. Therefore, there are cases where the distance between signal points becomes larger, so the average power of the signal points of the eye pattern of the figure becomes 216.

On the other hand, in the signal constellation according to the present invention shown in Fig. 8, since the signal points are arranged at equal intervals, the average power of the signal point becomes a small 182. Further, compared with the case of the V.29 of Fig. 9, the S/N error rate may be improved by exactly 0.76 dB (theoretical value) and the peak factor can be improved by exactly 0.5 dB.

The method of selection of signal points explained using Fig. 7 and Fig. 8 will be explained next using actual numerical values.

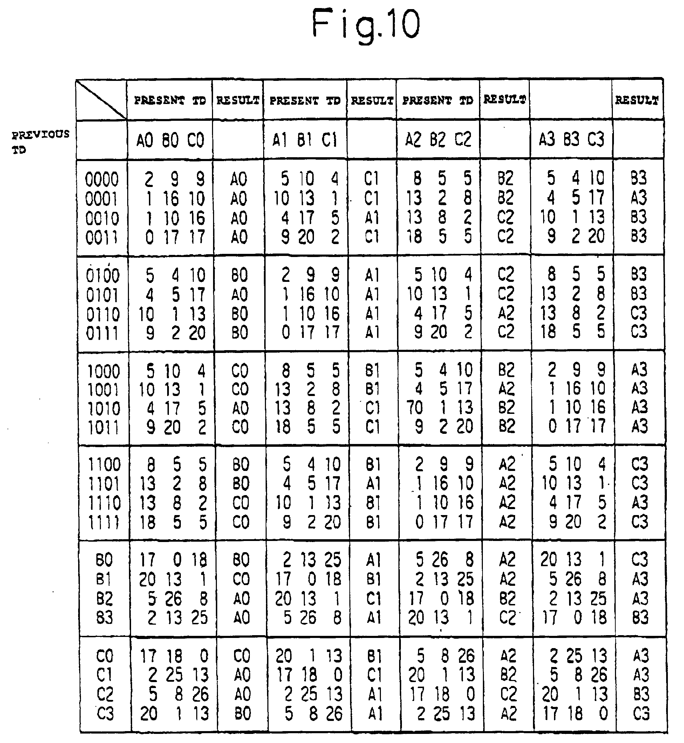

Figure 10 is a view of numerical values for explaining the method of selection of signal points according to the present invention.

In the figure, the present TD is a signal point of the transmission data currently input to the ROM 61 (Fig. 7). As explained above, when the signal point of the present TD is inside the frame (Fig. 8), the signal point is sent to the receiving side as it is, so only a signal point present outside of the frame is displayed as the present TD shown in Fig. 10. That is, these are (A0, B0, C0) to (A3, B3, C3).

The previous TD is shown at the left end of Fig. 10. The previous TD is the signal point output from the ROM 61 before the input of the present TD is input (one of 24 values) and is temporarily held in the register 62 (Fig. 8).

For example, when the signal point A0 is input as the present TD, the signal point of the previous TD at that time is considered to be (0000). In this case, the square distance (x²+y²) of the signal point (0000) with A0 is 2, the square distance with B0 is 9, and the square distance with C0 is 9. As a result, A0 giving the smallest square distance with respect to the signal point (0000) is selected at the ROM 61 and sent to the receiving side.

Looking at the above square distance (x²+y²), as shown in Fig. 8, x = (0000) → (0001) = 1 from the signal point (0000) to the signal point A0, therefore y = (0001) → (0011) = 1, so x²+y² is 2. Further, from the signal point (0000) to the signal point B0, x = (0000) → (0100) → (0110) → B0 = 3, therefore y = 0 (no change in y-direction), so x²+y² = 9.

The square distances shown in Pig. 10 are computed in accordance with the signal constellation of Fig. 8 in advance. The results of the computations are stored in advance in the ROM 61. Therefore, if the signal points of the present TD and the previous TD are given to the ROM 61 as addresses, the ROM 61 can instantaneously read the signal point giving the least square distance.

As explained above, if a signal point of the data TD to be transmitted (in particular a signal point outside the frame) is selected, the in-phase components of the preceding and succeeding signal points are emphasized. As a result, the energy near the carrier frequency increases.

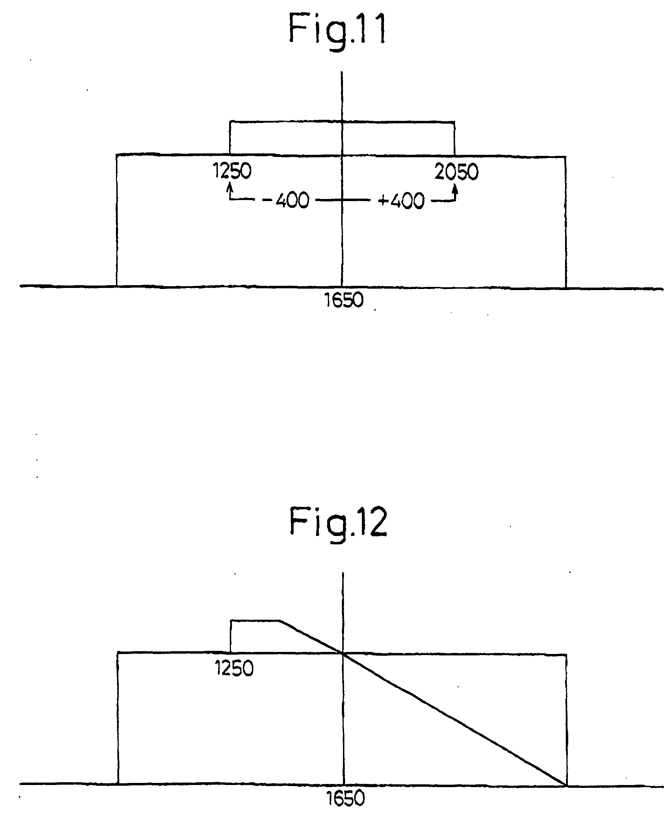

Figure 11 is a view of the spectrum in the state where the energy near the carrier frequency increases. The abscissa indicates the frequency, while the ordinate indicates the energy.

When the carrier frequency is 1650 Hz, the energy of the portion of the +400/-400 Hz band (1250 Hz to 2050 Hz) increases with respect to the carrier frequency. That is, if the baud rate is 2400 Baud, as shown in Fig. 8, since the signal points of A, B, and C are arranged at 120° intervals from each other, there is a deflection width of +60°/-60°. This corresponds to the above +400/-400 Hz (2400+6).

Figure 12 is a view of the spectrum after the spectrum of Fig. 11 passes through the filter (DE) 29.

The transmission signal in the modem transmitter 2T (Fig. 2) passes through the deemphasis filter (DE) 29 with the spectrum shown in Fig. 11. With the spectrum shown in Fig. 11 as it is, however, the output from the filter 29 ends up in the state shown in Fig. 12. To prevent this, in the present invention, a -400 Hz frequency shift is applied to the output of the signal point generating circuit 24 (Fig. 2) by a frequency shifter and shifts the energy of transmission to the low band side.

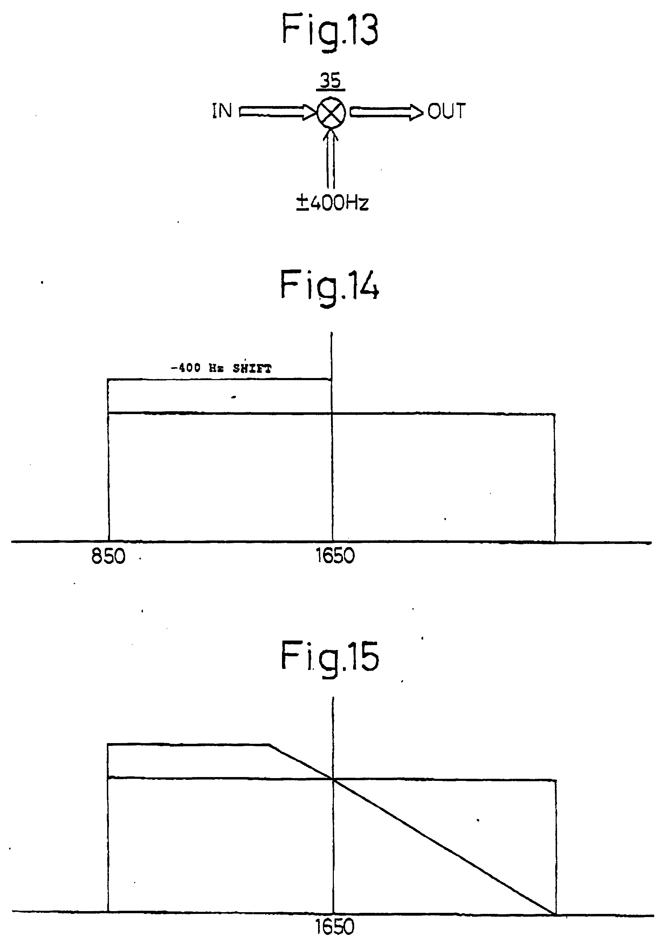

Figure 13 is a view of an example of a frequency shifter. For example, this can be realized as a vector multiplier using a DSP. This is a circuit which multiplies a -400 Hz carrier with the digital baseband signal and obtains a frequency shifted output (OUT). This frequency shifter 35 may for example be provided at the ROT 25 as shown in Fig. 2.

Figure 14 is a view of the spectrum when applying a frequency shift to the spectrum of Fig. 11. Therefore, the portion where the energy increases shifts to the 850 Hz to 1650 Hz band. The signal having the spectrum shown in Fig. 14 is passed through the deemphasis filter 29.

Figure 15 is a view of a spectrum when a frequency shifted signal passes through the filter 29.

Next, an explanation will be given of the improvement (ii) among the three above improvements aimed at in the present invention. The improvement (ii) is the mounting of the deemphasis filter (DE) in the modem transmitter 2T and the mounting of the emphasis filter (EMP) 41 in the modem receiver 2R.

As shown in Fig. 2, after the modulator (MOD), a deemphasis filter (DE) 29 having inverse characteristics from the filter characteristics of the preemphasis filter 11. of the radio transmitter 1T is inserted.

Figure 16 is a view of the characteristics of the deemphasis filter and the emphasis filter in the modem of the present invention. The deemphasis filter 29 according to the present invention has inverse characteristics from the characteristics of the preemphasis filter 11 of the radio transmitter 1T (Fig. 21) in the range of 1.0 kHz to 3.0 kHz. In the range of 0.3 kHz to 1.0 kHz, however, the characteristics become flat <F>. This is because there is an upper limit in the signal level able to be input to the preemphasis filter 11 of the radio transmitter 1T and if the inverse characteristics of the preemphasis characteristics <11> shown in Fig. 21 are given over the entire band range, the level of the signal in the low band would become particularly excessive. This is to prevent it.

By using the deemphasis filter 29 for the modem transmitter 2T, it is possible to maximize the input signal to the radio transmitter 1T (transmission level of modem).

As explained in Fig. 3, in the modem receiver 2R of the present invention, an emphasis filter (EMP) 41 having inverse characteristics from the characteristics of the deemphasis filter 32 of the radio receiver 1R is provided before the demodulator (DEM) 42. The characteristics of the deemphasis filter of the radio receiver 1R are shown by <32> in Fig. 21, while the characteristics of the emphasis filter (41) of the modem receiver 2R are shown as <41> in Fig. 16.

The emphasis filter 41 of the modem receiver 2R according to the present invention, like the deemphasis filter 29 of the modem transmitter 2T and as shown in Fig. 16, has flat characteristics <F> for the band of 0.3 kHz to 1,0 kHz.

By using such an emphasis filter 41, it is possible to return the signal before demodulation (DEM) at the modem receiver 2R to a signal having the original flat characteristics. Further, by providing the output side of the EQL 46 with for example a frequency shifter 35' similar to that shown in Fig. 13, for example as shown in Fig, 3, it is possible to shift the frequency by +400 Hz and return the transmission spectrum to the original spectrum.

Next, an explanation will be given of the improvement (i) among the three improvements aimed at by the present invention. The improvement (i) is optimization of the carrier frequency.

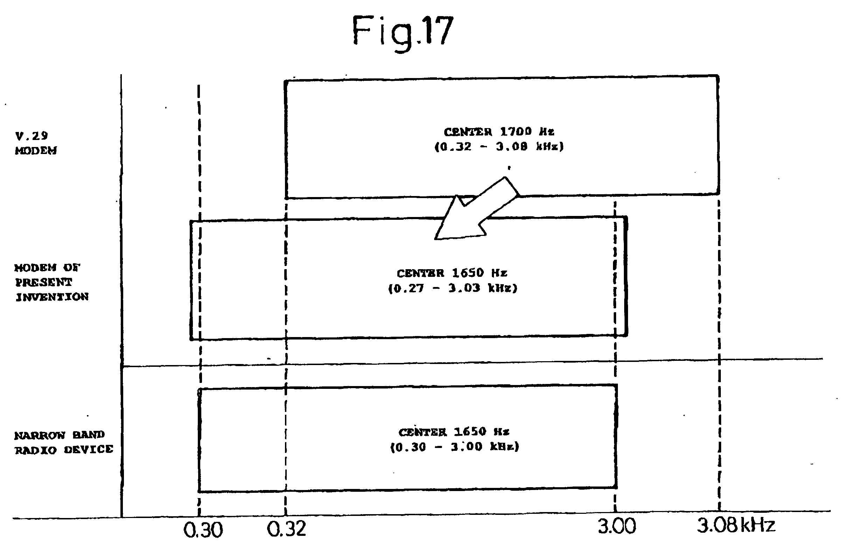

Figure 17 is a view for explaining the optimization of the carrier frequency according to the present invention.

The top section shows the carrier frequency and transmission band of a V.29 modem, the center section shows the carrier frequency and transmission band shifted in frequency according to the present invention, and the bottom section shows the carrier frequency and transmission band of a narrow band radio.

The transmission band of the V.29 modem shown in the top section is 0.3 to 3.1 kHz (in Fig. 17, 0.32 to 3,08 kHz) and the center frequency is 1700 Hz.

On the other hand, the transmission band of the narrow band radio shown in the bottom section is 0.30 to 3.00 kHz and the center frequency is 1650 Hz.

Therefore, in both the top section and the bottom section, the center frequencies and the transmission bands do not match each other. Consequently, with the modem transmitter 2T according to the present invention, the transmission signal is modulated and transmitted to the radio transmitter 1T by a carrier signal of 1650 Hz output from the carrier generating circuit (CRR) 28.

Due to this, with a V.29 modem, by making the 1700 Hz carrier frequency the 1650 Hz center frequency of the narrow band radio, it is possible to match the center frequency of the transmission signal output from the modem with the center frequency of the narrow band radio.

Comparing the transmission bands, it is 0.27 to 3.03 kHz with the modem of the present invention. The transmission band ends up protruding from the transmission band of a narrow band radio (0.3 to 3.00 kHz) by about +0.3/-0.3 kHz. A small deviation of this extent, however, does not obstruct practical data transmission that much. What is important here is to match the carrier frequencies.

With the modem receiver 2R, conversely, the received signal of the center frequency of 1650 Hz output from the radio receiver 1R is demodulated by the carrier signal (frequency 1650 Hz), then the energy shifted to the low band at the transmission side is restored to its original state by the inverse frequency movement circuit (inverse ROT) 47.

Finally, the effects of the improvements (i), (ii), and (iii) according to the present invention will be corroborated.

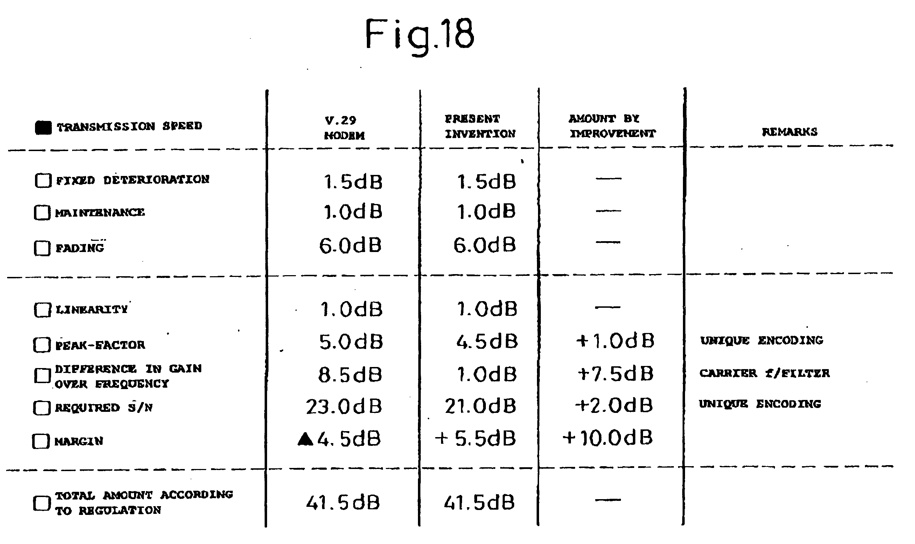

Figure 18 is a view of the degree of improvement according to the present invention.

As shown in this figure, according to the present invention, the operating margin in a V.29 modem, which had been -4.5 dB, can be made +5.5 dB and can sometimes be improved to 10.0 dB. Further, the required S/N ratio can be improved from the 23.0 dB of the past to 21.0 dB and the peak factor from 5.0 dB to 4.5 dB.

Note that in the present invention, the ROT unit 25 or the deemphasis unit 29 is provided at the modem transmitter 2T, while the inverse ROT unit 47 or emphasis unit 41 is provided the modem receiver 2R. This is because this configuration considers the connection of a radio for general voice transmission to a modem. According to the concept of the present invention, however, it is clear that there is no particular reason why these characterizing portions (25, 29, 41, and 47) have to be provided in the modems (2T, 2R).

For example, there is nothing stopping using a general configuration modem as the modem connected to the radio and providing a ROT unit 25 or inverse ROT unit 47 at the radio (1T, 1R) side. Further, a configuration removing the preemphasis circuit or deemphasis circuit originally provided at the radio side may also be selected.

Note that when transmitting an audio signal, it is necessary to provide a preemphasis circuit and deemphasis circuit at the transmission side and receiving side of the radio. In this case, it is possible to provide a path for input and output of the audio signal and a path for input and output of the transmission data at the radio, not provide a preemphasis circuit and a deemphasis circuit on the path for input and output of the transmission data from one modem to another modem, and provide a preemphasis circuit and deemphasis circuit on the path for input and output of a audio signal.

Further, it is also possible to employ conventional modems and radios and connect an adapter having a ROT/inverse ROT unit or an emphasis unit/deemphasis unit or other separate device according to the present invention between these conventional apparatuses.

Further, as clear from the above explanation, the present invention has as one of its features (iii) giving redundancy to the set of signal points at the outside of a signal constellation coordinate system with a large energy, not giving redundancy to the set of signal points having a small energy at the inside, and minimizing the amount of deviation between preceding and succeeding signal points for all signal points. Further, it has as a feature, when a redundant signal point is selected, the calculation of the amounts of deviation between a plurality (whole number more than 1) of signal points (A, B, and C) allocated for that signal point and a past signal point and selection of the signal point giving the minimum amount of deviation as the signal point of the transmission data TD.

At this time, the present invention has one of its features the provision of a ROM, computing the amount of deviation among all signal points and storing the results of the computation in the ROM, reading out from the ROM and holding the output temporarily in a register, feeding this back to the input of the ROM as an address, and automatically selecting the signal point of the minimum amount of deviation.

The present invention has as one of its features (ii) giving the modem filter characteristics for compensating for the characteristics of the radio so as to give frequency characteristics optimized for data transmission using a radio.

Further, it has as its feature (iv) to apply vector multiplication to the transmitting baseband signal to concentrate the transmission energy at the low band or apply vector multiplication to the received baseband signal to restore the energy shifted to the low band at the transmitting side to the original spectrum.

Still further, the present invention has as one of its features (i) matching the demodulated carrier frequency of the modem with the center frequency of the transmission band of the radio.

Further, the present invention realizes a method of signal-point generation able to add redundancy to signal points to minimize the amount of deviation between signal points and to minimize the peak factor.

As explained above, according to the present invention, it becomes possible to minimize the peak factor of a modem. Further, it becomes possible to improve the S/N error rate. Due to this, it is possible to broaden the dynamic range at the time of over 9600 bps high speed data transmission in a radio transmission path without a change of the characteristics of the radio, it is possible to secure a sufficient operating margin even if considering fading and becomes possible to achieve a practical system under conditions of the same level as those for 1200 bps.

## Claims

1. A transmission apparatus to which another transmission apparatus provided with a preemphasis filter is connected,
said transmission apparatus provided with a deemphasis filter having inverse characteristics from the characteristics of the preemphasis filter.

2. A transmission apparatus to which another transmission apparatus having a deemphasis filter and outputting data received from a transmission path through the deemphasis filter and receiving data output from said other transmission apparatus,
said transmission apparatus provided with an emphasis filter having inverse characteristics of said deemphasis filter.

3. A transmission apparatus provided with:
a means for matching a transmission signal having a first center frequency with a second center frequency different from the first center frequency and
a means for demodulating a signal output from said frequency moving means by a carrier signal having a frequency equal to the second center frequency.

4. A transmission apparatus provided with:
a means for demodulating a transmission signal having a first center frequency by a carrier signal having a frequency the same as the first center frequency and
a means for matching a center frequency of a signal output from said demodulating means a second center frequency different from the first center frequency.

5. A transmission apparatus provided with:
a means for sequentially transmitting signal points of data input at a transmitting side to a receiving side and
a means for selecting said signal points so that in-phase components of preceding and succeeding signal points are emphasized.

6. A transmission apparatus as set forth in claim 5, wherein said selecting means further includes a ROM for storing an amount of deviation among signal points obtained in advance by computation.

7. A transmission apparatus as set forth in claim 6, further including a register for temporarily holding a preceding signal point read from said ROM and reading from said ROM by an address comprised of a pair of currently input data and said preceding signal point.

8. A transmission apparatus as set forth in claim 1, further including a frequency shift means for concentrating the transmission energy at a low band side of the transmission band.

9. A transmission apparatus as set forth in claim 2, further including a frequency shift means for shifting the transmission energy of a low band side of the transmission band to a high band side.

10. A transmission apparatus as set forth in claim 1, wherein said deemphasis filter creates said inverse characteristics at the high band side of the transmission band and maintains flat characteristics at the low band side of the transmission band.

11. A transmission apparatus as set forth in claim 2, wherein said emphasis filter creates said inverse characteristics at the high band side of the transmission band and maintains flat characteristics at the low band side of the transmission band.

12. A method of signal-point generation for generating signal points corresponding to input data,
said method of signal-point generation comprising:
selecting a plurality of signal point candidates corresponding to the input data,
calculating the distance between a signal point output in the past and each of the plurality of signal point candidates, and
outputting the signal point candidate giving the minimum calculated distance as the signal point.

13. A method of signal-point generation as set forth in claim 12, further comprising:
classifying the signal points into first signal points and second signal points,
outputting a first signal point as it is when the input data corresponds to the first signal point, and
selecting a plurality of signal point candidates including a second signal point and comparing the distance between these and a previously output signal point when the input data corresponds to a second signal point.

14. A method of signal-point generation comprising defining a signal constellation having a total of 24 signal points giving redundancy to signal points at the outside far from an origin of a signal constellation coordinate system and not giving redundancy to signal points at the inside close to the origin and outputting signal points from said constellation.
